(19) Europäisches Patentamt / European Patent Office / Office européen des brevets

(11) EP 3 789 756 A1

(12) EUROPEAN PATENT APPLICATION
published in accordance with Art. 153(4) EPC

(43) Date of publication:
10.03.2021 Bulletin 2021/10

(51) Int Cl.:
G01N 21/57 (2006.01)     G01J 3/51 (2006.01)

(21) Application number: 19766643.1

(22) Date of filing: 15.03.2019

(86) International application number:
PCT/JP2019/010814

(87) International publication number:
WO 2019/177145 (19.09.2019 Gazette 2019/38)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 16.03.2018  JP 2018049575

(71) Applicant: KONICA MINOLTA, INC.
Tokyo
100-7015 (JP)

(72) Inventors:
• ISHIWATA, Takumi
  Tokyo 100-7015 (JP)
• TAMURA, Kishio
  Tokyo 100-7015 (JP)

(74) Representative: Gille Hrabal
Brucknerstrasse 20
40593 Düsseldorf (DE)

(54) **GLOSS VALUE CALCULATING DEVICE, GLOSS VALUE MEASURING DEVICE, COLOR TONE QUANTIFYING DEVICE FOR GLOSSY COLOR, AND GLOSS VALUE CALCULATING METHOD**

(57)     The objective of the present invention is to provide a device for calculating a gloss value using a gloss value calculating method having an enhanced correlation with an impression of gloss sensed visually by a person. The present invention for achieving this objective relates to a gloss value calculating device. The gloss value calculating device comprises: a peak calculating unit which uses distribution information of brightness or reflection intensity with respect to a light reception angle obtained by measuring reflected light resulting from the reflection of measuring light radiated at an object, to obtain the peak height and spread of the brightness or the reflection intensity in the distribution information; and a gloss value calculating unit which calculates a gloss value represented by a ratio of the peak height to the peak spread.

FIG. 1

EP 3 789 756 A1

## Description

Technical Field

The present invention relates to a gloss value calculation device, a gloss value measurement device, a glossy color tone quantification device, and a gloss value calculation method.

Background Art

When an image to be used for a label, a package, a public notice, or the like is created, it is desirable that a customer, who determines a tone or the like of an image, and a contractor, who creates an image having the determined tone, have a common idea about the tone or the like of the image to be created. For example, the persons involved can transfer and share information about the tone by representing the tone or the like of the image by using numerical values such as L*, a*, and b* in the CIE Lab color space or numerical values such as R, G, and B in the RGB color model.

When an image having a metallic gloss is to be created, it is similarly desirable that the persons involved transfer and share information about the gloss.

As a method for converting a gloss into a numerical value, the following method is proposed. A gloss is converted into a numerical value by using a difference or ratio of lightness observed at different reflection angles when measurement light is incident on an image, such as Hunter's contrast glossiness, Flop Index, or Flip-Flop. In addition, PTL 1 describes a method for analyzing a parameter, such as density, of main components obtained by imaging a measurement target surface and for grouping image data having substantially the same gloss. PTL 2 describes a method for evaluating, when the Bidirectional Reflectance Distribution Function (BRDF) of powder is obtained while changing an incident angle of the measurement light, depending on whether a half width and a peak value of the BRDF falls within a certain range, whether the powder has a unique, pearly texture (blur). PTL 3 uses, as a gloss value of a fiber, a ratio ($2\sigma$/H) of a peak width ($2\sigma$) to a peak height (H) of a reflection intensity-sample rotation angle curve obtained with a goniophotometer.

Citation List

Patent Literatures

PTL 1: WO 2005/075961
PTL 2: Japanese Patent Application Laid-Open No. 2016-197035
PTL 3: Japanese Patent Application Laid-Open No. 2011-162886

Summary of Invention

Technical Problem

As described above, various methods have been proposed for converting a gloss into a numerical value. However, the gloss value obtained by these methods is not highly correlated with glossiness visually sensed by humans. The obtained gloss value does not sufficiently represent the glossiness visually sensed by humans.

The present invention has been made in view of the above issue, and an object thereof is to provide a gloss value calculation method highly correlated with the glossiness visually sensed by humans, a device that calculates a gloss value and a device that measures a gloss value by using the method, a device that quantifies a tone of glossy color by using a gloss value calculated by the method, and a device that forms an image by using the calculated gloss value.

Solution to Problem

A gloss value calculation device for solving the problem mentioned above comprises: a peak calculation section that obtains, in distribution information of lightness or reflection intensity, a height or an area of a peak of the lightness or reflection intensity and a width of the peak of the lightness or reflection intensity, the lightness or reflection intensity being relative to a light receiving angle and being obtained by measuring reflected light resulting from reflection of measurement light used for irradiation of an object; and a gloss value calculation section that calculates a gloss value represented by a ratio of the height or area of the peak to the width of the peak.

A gloss value measurement device for solving the problem mentioned above comprises: a goniophotometer that measures, at a plurality of different light receiving angles, a radiant intensity of reflected light resulting from light used for irradiation of and reflected on an object; and the gloss value calculation device.

A glossy color tone quantification device for solving the problem mentioned above comprises: the gloss value calculation device; and a stimulus value output section that combines a gloss value measured by the gloss value measurement device and chromaticity of the object and outputs a composite value as a stimulus value representing glossy color of the object in a color space.

A gloss value calculation method for solving the problem mentioned above comprises: obtaining, in distribution information of lightness or reflection intensity, a height or an area of a peak of the lightness or reflection intensity and a width of the peak of the lightness or reflection intensity, the lightness or reflection intensity being relative to a light receiving angle and being obtained by measuring reflected light resulting from reflection of measurement light used for irradiation of an object; and calculating a gloss value represented by a ratio of the height or area of the peak to the width of the peak.

Advantageous Effects of Invention

According to the present invention, there are provided a gloss value calculation method highly correlated with the glossiness visually sensed by humans, a device that calculates a gloss value and a device that measures a gloss value by using the method, a device that quantifies a tone of glossy color by using a gloss value calculated by the method, and a device that forms an image by using the calculated gloss value.

Brief Description of Drawings

FIG. 1 is a block diagram schematically illustrating a gloss value measurement device according to a first embodiment of the present invention;

FIG. 2 is a flowchart of a method for measuring a gloss value of a sample with the gloss value measurement device according to the first embodiment of the present invention;

FIG. 3 illustrates an example of a graph representing distribution information generated by a distribution information generation section in the first embodiment of the present invention, in which a light receiving angle ($\theta$) and lightness ($L^*$) are plotted on a horizontal axis and a vertical axis, respectively;

FIG. 4 is a graph indicating a state in which a function is fit to the graph illustrated in FIG. 3;

FIG. 5A schematically illustrates a state in which part of incident light that is incident on an object becomes specular reflection light and another part of the incident light becomes diffuse reflection light, and FIG. 5B is a graph for describing the state in FIG. 5A in terms of FIG. 4;

FIG. 6 is a flowchart of a method for measuring a gloss value of a sample with a gloss value measurement device according to a second embodiment of the present invention;

FIG. 7 is a block diagram schematically illustrating a tone quantification device according to a third embodiment of the present invention; and

FIG. 8 is a conceptual diagram illustrating a color space where coordinate axes are chromaticity and glossiness obtained in the third embodiment of the present invention.

Description of Embodiments

[First Embodiment]

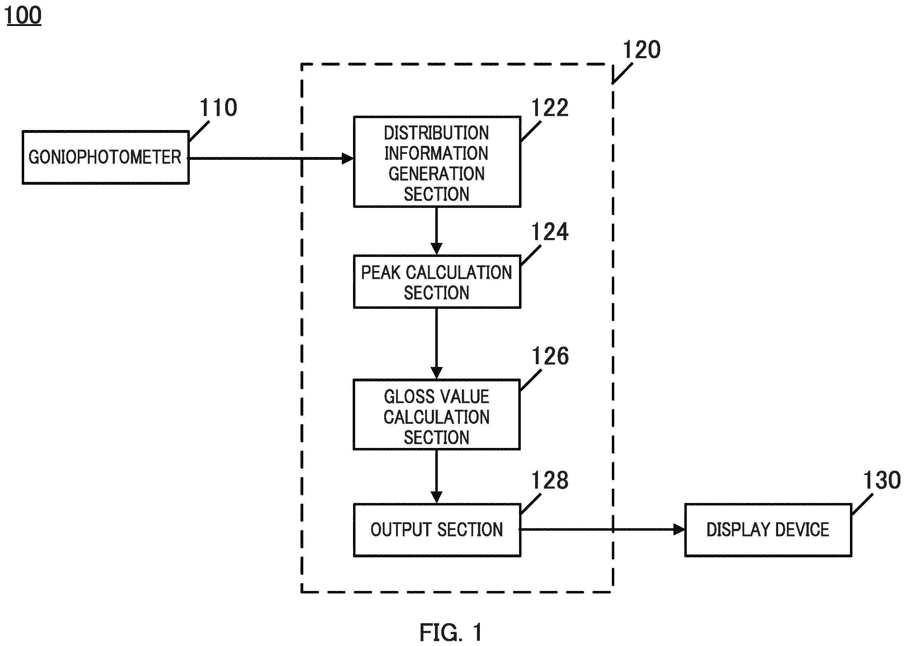

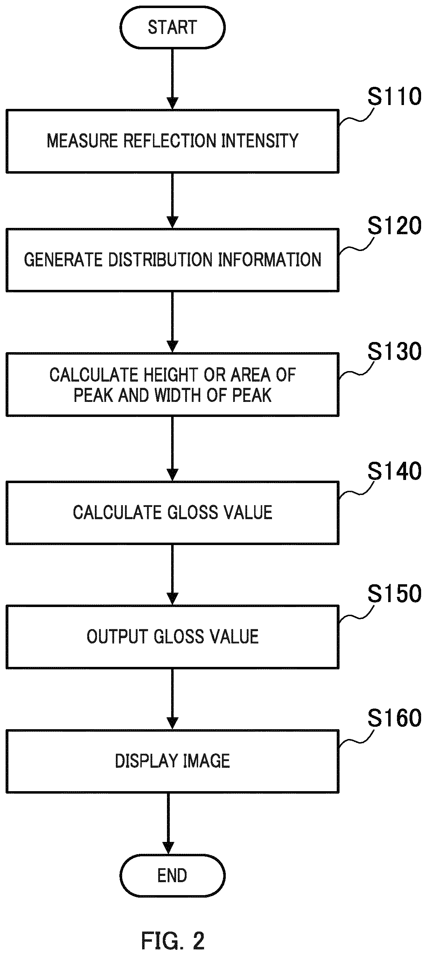

FIG. 1 is a block diagram schematically illustrating gloss value measurement device 100 according to a first embodiment of the present invention. FIG. 2 is a flowchart of a method for measuring a gloss value of a sample with gloss value measurement device 100 according to the first embodiment.

Gloss value measurement device 100 includes goniophotometer 110, gloss value calculation device 120, and display device 130.

Although not illustrated, gloss value measurement device 100 includes, for example, a central processing unit (CPU) as a processor, a storage medium such as read only memory (ROM) storing a control program, a work memory such as a random access memory (RAM), and a communication circuit. In this case, functions of gloss value measurement device 100 are implemented by the CPU executing the control program. Although at least part of the program for gloss value measurement device 100 to execute processing is stored on a server, at least part of the program may also be stored on a cloud server.

Goniophotometer 110 measures, at a plurality of different light receiving angles, radiant intensity of reflected light resulting from measurement light incident and reflected on a region of a sample having a specific tone (step S110).

Goniophotometer 110 includes a stage, a light source, an optical system, and a light receiver (none of which is illustrated). The sample is placed on the stage. The light source emits the measurement light. The optical system irradiates the sample placed on the stage with the measurement light emitted from the light source. The light receiver measures radiant intensity of reflected light resulting from light used for irradiation of the sample placed on the stage and reflected on the sample. While goniophotometer 110 rotates the stage on which the sample is placed, goniophotometer 110 changes the angle for irradiating the sample with the measurement light in synchronization with the rotation, or changes the angle of the light receiver with respect to the sample placed on the stage, so as to measure, at a plurality of different light receiving angles, the radiant intensity of the reflected light resulting from the measurement light that is incident at a certain incident angle. The radiant intensity of the reflected light may be measured in a two-dimensional distribution of the light receiving angle (e.g., an angle [deg] or a plane angle [rad]) or may be measured in a three-dimensional distribution of the light receiving angle (e.g., a solid angle [st] or a square degree [deg$^2$]).

The angle of the measurement light incident on the sample may be set to any angle. Considering a case of measuring a sample for which the Fresnel reflectance is dependent on the incident angle, it is preferable to set 30° or more and 60° or less, which is an angle range where variations in the reflectance depending on the incident angle are small for the sample.

As compared with typical color, glossy color reflects more light that is incident on an object as specular reflection with directivity. Thus, large directivity is generated in a spatial distribution of reflected light of glossy color to be sensed, and the directivity is considered to largely affect the tone of glossy color to be visually sensed by humans. Specifically, the tone of glossy color to be visually sensed by humans is affected by a degree at which the lightness or reflection intensity of reflected light is densely distributed to the angle of specular reflection. Thus, the range of the light receiving angle may be set to a range including an angle at which at least reflected light resulting from specular reflection on the sample can be received and at least part of the reflected light resulting from diffuse reflection on the sample can be received. For example, in a case where the incident angle is 45°, the range of the light receiving angle may be about -20° to 80°. However, even if the range of the light receiving angle is 0° to 60°, the calculated gloss value can have higher correlation with the glossiness visually sensed by humans. The intervals between the plurality of different light receiving angles may fall within a range in which a number of radiant intensities may be obtained, from which distribution information to be used for processing described later may be obtained.

Goniophotometer 110 transmits data of the above plurality of different light receiving angles and the radiant intensities measured at the light receiving angles to gloss value calculation device 120 through the communication circuit.

The sample, which is an object whose gloss value is to be measured, may be any object that has a certain shape or no definite form and can reflect at least part of the measurement light. The sample may be a molded product having the tone of the material as it is or may be an image product obtained by applying a tone to a molded body with a colorant.

Gloss value calculation device 120 includes processing sections that are distribution information generation section 122, peak calculation section 124, gloss value calculation section 126, and output section 128. Although not illustrated, gloss value calculation device 120 includes, for example, a central processing unit (CPU) as a processor, a storage medium such as read only memory (ROM) storing a control program, a work memory such as a random access memory (RAM), and a communication circuit. In this case, functions of gloss value calculation device 120 are implemented by the CPU executing the control program. Although at least part of the program for gloss value calculation device 120 to execute processing is stored on a server, at least part of the program may also be stored on a cloud server. Although not illustrated, gloss value calculation device 120 includes a reception section that receives a signal transmitted from goniophotometer 110 and a transmission section that transmits a signal generated by output section 128 to display device 130.

Distribution information generation section 122 generates distribution information of lightness or reflection intensity (reflectance or luminance) on the basis of the data of the plurality of different light receiving angles and the radiant intensities measured at the light receiving angles transmitted from goniophotometer 110 and received by the reception unit included in gloss value calculation device 120 (step S120).

The distribution information may be represented as a graph, for example, in which the light receiving angle and the lightness or reflection intensity are plotted on the horizontal axis and the vertical axis, respectively.

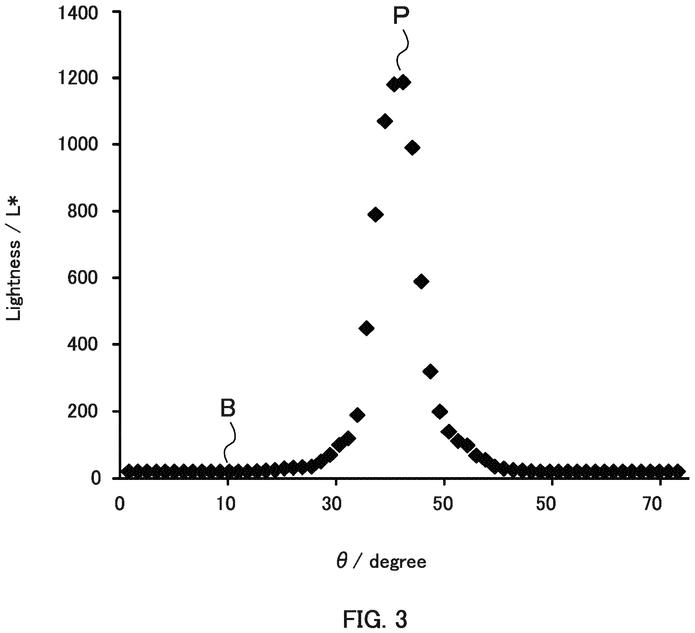

FIG. 3 illustrates an example of the graph representing the distribution information generated by distribution information generation section 122 in this embodiment, in which the light receiving angle (θ) and the lightness (L*) are plotted on the horizontal axis and the vertical axis, respectively. Although the lightness (L*) in the CIE 1976 (L*, a*, b*) color space is used for the vertical axis in FIG. 3, the lightness (L) in the Hunter 1948 L, a, b color space, a Y-component value or the like in the CIE 1931 XYZ color space may alternatively be used as the lightness for the vertical axis, or the reflection intensity (reflectance or luminance) of the measurement light may alternatively be used for the vertical axis. Among these, in order to further increase correlation with the glossiness visually sensed by humans, it is preferable to use a value representing the lightness based on a psychometric quantity that is corrected so as to match human sensing, such as the lightness (L*) in the CIE 1976 (L*, a*, b*) color space. Distribution information generation section 122 can calculate these lightness and reflection intensity from the above radiant intensity and the intensity of the measurement light by a known method.

In this embodiment, distribution information generation section 122 generates distribution information of the lightness (L*) in the CIE 1976 (L*, a*, b*) color space.

When the region of the sample irradiated with the measurement light is glossy, as illustrated in FIG. 3, the distribution information includes a peak P of the lightness or reflection intensity originating from the reflected light resulting from specular reflection on the region and a base B originating from the reflected light resulting from diffuse reflection on the region.

In the distribution information generated by distribution information generation section 122, peak calculation section 124 calculates the height or area of the peak P of the lightness or reflection intensity and the width of the peak P of the lightness or reflection intensity (step S130).

The height of the peak P may be the value of the lightness or reflection intensity (the height of the peak in the graph) at the light receiving angle for the peak P. Note that the above width of the peak P is typically a value taking into account the height of the base B, and for example, the half width is based on the height of the peak P relative to the height of the base B. Thus, for matching with the width of the peak P, the height of the peak P is preferably a difference between the value of the lightness or reflection intensity at the peak P and the value of the lightness or reflection intensity at the base B.

The area of the peak P may be the area of the peak from a base start (which is a point at which an increasing rate relative to a base line becomes higher than or equal to a predetermined level) to a base end (which is a point at which the increasing rate relative to the base line becomes lower than or equal to a predetermined level), the area from a peak start to a peak end (each of which a point at which the lightness or reflection intensity between adjacent peaks becomes the minimum), or the area within the range of a half width including the half width at half maximum and the full width at half maximum of the peak P.

The width of the peak P may be a half width including the half width at half maximum and the full width at half maximum of the peak P or may be an interval between a plurality of inflection points appearing at different light receiving angles in an expression obtained by fitting a polynomial function to the distribution information.

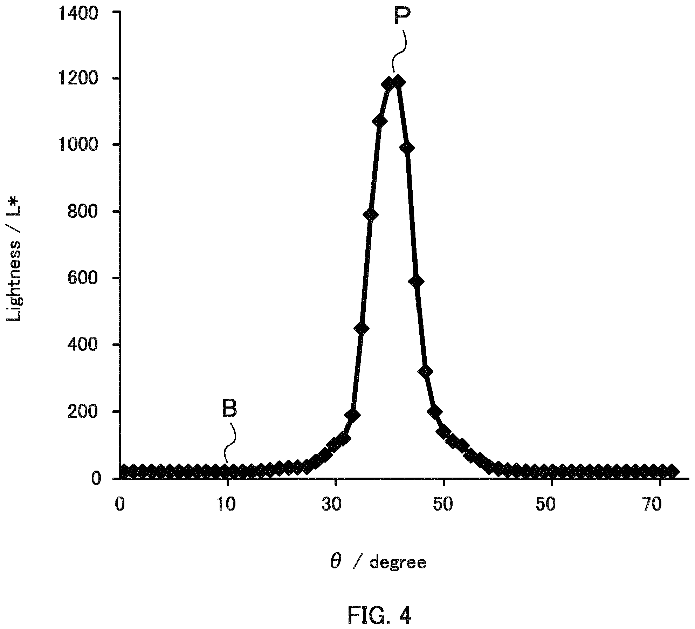

In this embodiment, peak calculation section 124 fits the distribution information to a function to calculate the height or area of the peak P and the width of the peak P (see FIG. 4). The function may be any continuous function that is typically used for fitting to the shape of the peak in the spectrum, and may be a function such as a Lorentz function, a Gaussian function, a Voigt function, or a pseudo Voigt function. Any of these functions that highly matches the shape of the peak may be selected in accordance with the shape of the peak P. For example, according to the inventors' knowledge, when measuring a sample having high glossiness, since the obtained peak has a convex shape with a certain base, a Lorentz function that highly matches the shape of the base as well as the shape of the peak is preferably used. Note that when measuring a sample such as a mirror, since the obtained peak has substantially a bell shape, a Gaussian function that highly matches the bell shape or a Voigt function and a pseudo Voigt function that have an intermediate shape of a Lorentz function and a Gaussian function is preferably used. Note that the above function may be a Phong model expression, a Torrance-Sparrow model expression, a Trowbridge-Reitz model expression, a Cook-Torrance model Beckman distribution expression, or the like to be used as the BRDF.

The Lorentz function used in this embodiment is a function represented as the following Expression (1).

[Math. 1]

$$f(x) = \frac{H}{1 + \left(\frac{x - x_S}{\frac{W}{2}}\right)^2} + B$$

$$\cdots \text{Expression (1)}$$

In Expression (1), the constants $H$, $x_S$, $W$, and $B$ respectively represent the height of the peak P relative to the base B (the value of the lightness or reflection intensity), the peak position (typically, a specular reflection angle), the half width, and the height of the base B (the value of the lightness or reflection intensity). In addition, in Expression (1), the variable x represents the light receiving angle.

Peak calculation section 124 may estimate the constants $H$, $x_S$, $W$, and $B$ by the least squares method, the maximum likelihood estimation, or the like so as to reduce the deviation between the actually measured distribution information (see FIG. 3) and the fit function (see FIG. 4). In addition, the constants $H$, $x_S$, $W$, and $B$ may also be estimated by using software incorporated in a commercially available software package, such as Solver (registered trademark) of Microsoft Excel (registered trademark).

Gloss value calculation section 126 calculates the gloss value by using the height or area of the peak P and the width of the peak P calculated by the peak calculation section 124 (step S140).

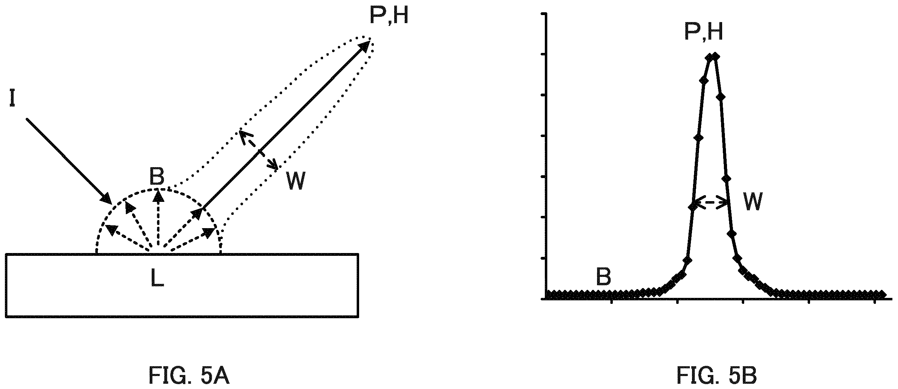

In this embodiment, the gloss value is represented by a ratio of the height or area of the peak P to the width of the peak P. As illustrated in FIG. 5A, incident light I that is incident on an object partly becomes specular reflection light P and partly becomes diffuse reflection light B (in FIG. 5A, the lightness or reflection intensity of the specular reflection light P and the lightness or reflection intensity of the diffuse reflection light B are represented by distances from a location L at which the incident light I is incident (the length of the solid arrow indicating the specular reflection light P and the length of broken arrows indicating the diffuse reflection light B). Note that the lightness or reflection intensity of the light P and the lightness or reflection intensity of the light B in FIG. 5A are adjusted for easy understanding and do not accurately reflect the lightness or reflection intensity that is actually measured and calculated). As described above, the degree of the gloss of an object sensed by an observer is affected by a degree of the lightness or reflection intensity of reflected light resulting from reflection of light incident on the object, being densely distributed to the angle of specular reflection (directivity of spatial distribution).

In this embodiment, the degree of the lightness or reflection intensity of reflected light being densely distributed to the angle of specular reflection, which is a scale indicating the directivity of spatial distribution, is represented by a ratio of the lightness or reflection intensity of the specular reflection light P to a half width W of the peak of the specular reflection light illustrated in FIG. 5B.

For example, in this embodiment, by using the height (H) of the peak relative to the base B, the half width (W) of the peak, and the height (B) of the base calculated by peak calculation section 124, gloss value calculation section 126 calculates a value represented by any of the following expressions (2), (3), (4), (5), (6), (7), and (8), preferably expressions (3), (4), (6), and (7), more preferably expressions (3) and (6), and uses the value as the gloss value.

[Math. 2]

$$\text{Gloss value} \ = \frac{|H-B|}{W}$$

$$\cdots \text{Expression (2)}$$

[Math. 3]

$$\text{Gloss value} \ = \log\frac{|H-B|}{W}$$

$$\cdots \text{Expression (3)}$$

[Math. 4]

$$\text{Gloss value} \ = \frac{\log(|H-B|)}{W}$$

$$\cdots \text{Expression (4)}$$

[Math. 5]

$$\text{Gloss value} \ = \frac{|H-B|}{\log W}$$

$$\cdots \text{Expression (5)}$$

[Math. 6]

$$\text{Gloss value} \ = \left(\frac{|H-B|}{W}\right)^{x}$$

$$\cdots \text{Expression (6)}$$

[Math. 7]

$$\text{Gloss value} = \frac{(|H - B|)^x}{W}$$

$\cdots$Expression (7)

[Math. 8]

$$\text{Gloss value} = \frac{|H - B|}{W^x}$$

$\cdots$Expression (8)

In Expressions (6) to (8), the constant x may be set to any value. In addition, in Expressions (2) to (8), the height of the peak P (H-B) is an absolute value.

Alternatively, by using the height (H) of the peak relative to the base B and the half width (W) of the peak calculated by peak calculation section 124, gloss value calculation section 126 calculates a value represented by any of the following expressions (9), (10), (11), (12), (13), (14), and (15), preferably expressions (10), (11), (13), and (14), more preferably expressions (10) and (13), and uses the value as the gloss value.

[Math. 9]

$$\text{Gloss value} = \frac{H}{W}$$

$\cdots$Expression (9)

[Math. 10]

$$\text{Gloss value} = \log\frac{H}{W}$$

$\cdots$Expression (10)

[Math. 11]

$$\text{Gloss value} = \frac{\log H}{W}$$

$\cdots$Expression (11)

[Math. 12]

$$\text{Gloss value} = \frac{H}{\log W}$$

$\cdots$Expression (12)

[Math. 13]

$$\text{Gloss value} = \left(\frac{H}{W}\right)^x$$

$$\cdots \text{Expression (13)}$$

[Math. 14]

$$\text{Gloss value} = \frac{H^x}{W}$$

$$\cdots \text{Expression (14)}$$

[Math. 15]

$$\text{Gloss value} = \frac{H}{W^x}$$

$$\cdots \text{Expression (15)}$$

In Expressions (13) to (15), the constant x may be set to any value.

Alternatively, in this embodiment, based on a function (f(x)) obtained by peak calculation section 124 fitting the above distribution information, gloss value calculation section 126 calculates a value represented by any of the following expressions (16), (17), (18), (19), (20), (21), and (22), and uses the value as the gloss value.

[Math. 16]

$$\text{Gloss value} = \frac{\int_a^b f(x)dx}{W_e}$$

$$\cdots \text{Expression (16)}$$

[Math. 17]

$$\text{Gloss value} = \log \frac{\int_a^b f(x)dx}{W_e}$$

$$\cdots \text{Expression (17)}$$

[Math. 18]

$$\text{Gloss value} = \frac{\log \int_a^b f(x)dx}{W_e}$$

$$\cdots \text{Expression (18)}$$

[Math. 19]

$$\text{Gloss value} = \frac{\int_a^b f(x)dx}{\log W_e}$$

$$\cdots \text{Expression (19)}$$

[Math. 20]

$$\text{Gloss value} = \left(\frac{\int_a^b f(x)dx}{W_e}\right)^x$$

···Expression (20)

[Math. 21]

$$\text{Gloss value} = \frac{\left(\int_a^b f(x)dx\right)^x}{W_e}$$

···Expression (21)

[Math. 22]

$$\text{Gloss value} = \frac{\int_a^b f(x)dx}{W_e{}^x}$$

···Expression (22)

Note that in Expressions (16) to (22), a and b are values representing the light receiving angles at both ends of the peak. For example, a may be $(x_0-W/2)$, and b may be $(x_0+W/2)$ ($x_0$ is the light receiving angle of the peak P and is typically the angle of specular reflection). In addition, in this embodiment, in Expressions (16) to (22), $W_e$ is the same value as the half width (W). Furthermore, although the area of the peak P is obtained by integrating the height (H) of the peak P in Expressions (16) to (22), the area of the peak P may alternatively be obtained by integrating the absolute value of the difference between the height (H) of the peak P and the height (B) of the base.

The gloss value represented in this manner increases in accordance with increase of the lightness or reflection intensity of the specular reflection light P and increases in accordance with decrease of the region of light with strong lightness or reflection intensity including the specular reflection light P. Note that gloss value calculation section 126 may also use a non-logarithmic value as the gloss value. However, by setting, as the gloss value, a value obtained by converting at least one element constituting the above ratio (e.g., (H-B) or (H-B)/W) into a logarithm as illustrated in Expressions (3) to (5), (10) to (12), and (17) to (19) or a value obtained by raising at least one element constituting the above ratio (e.g., (H-B) or (H-B)/W) as illustrated in Expressions (6) to (8), (13) to (15), and (20) to (22), correlation with the glossiness visually sensed by humans is increased.

The gloss value calculated by any of the above Expressions (3) to (5), (10) to (12), and (17) to (19) is re-corrected by using a logarithmic value, on the basis of the Weber-Fechner law (according to the law, change in a physical stimulus is sensed by humans as a quantity in proportion to the logarithm thereof), so as to approach human sensation, and thus, the correlation can further be increased. In addition, the gloss value calculated by any of the above Expressions (6) to (8), (13) to (15), and (20) to (22) is re-corrected by using a power, on the basis of the Stevens' power law (according to the law, change in a physical stimulus is sensed by humans as a quantity in proportion to the power thereof), so as to approach human sensation, and thus, the correlation can further be increased.

As will be proved in Examples later, the gloss value calculated in the above manner has higher correlation with the glossiness visually sensed by humans.

In addition, as will be proved in Examples later, as in Expressions (16) to (22), the area of the peak P is obtained by integrating the height of the peak P, and the gloss value is represented by using the ratio of the area of the peak P to the width (W) of the peak P, and thus, the gloss value calculated for a low-gloss image has particularly higher correlation with the glossiness visually sensed by humans.

Output section 128 outputs the gloss value calculated by gloss value calculation section 126 as a numerical value representing the glossy color of the above region (step S150). In addition, output section 128 converts the numerical value into a signal that can be transmitted to external equipment of gloss value calculation device 120. The generated signal is transmitted to display device 130 from the transmission section included in gloss value calculation device 120.

Display device 130 is a display device of a smartphone, personal computer (PC), television (TV) set, or the like, and displays an image having the gloss value included in the signal generated by output section 128 on a display (step S160). When, for example, an image to be used for a label, a package, a public notice, or the like is created, the displayed image makes it easy for a customer, who determines a tone or the like of an image, and a contractor, who creates an image having the determined tone, to have a common idea about the tone or the like of the image to be created.

In the above manner, according to this embodiment, a gloss value having higher correlation with the glossiness visually sensed by humans can be calculated.

[Second Embodiment]

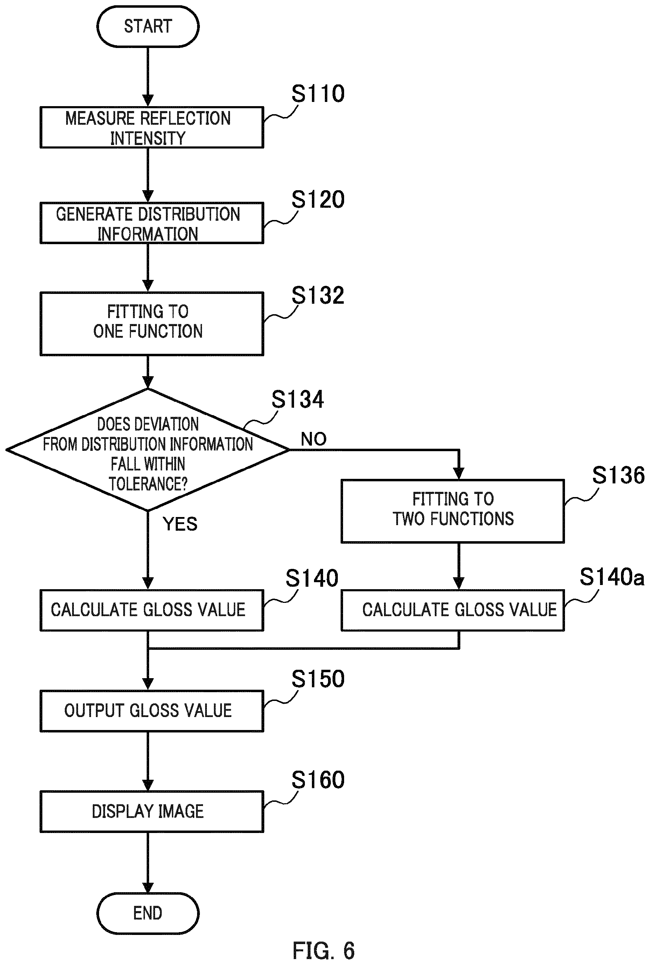

A gloss value measurement device according to a second embodiment of the present invention has the same configuration as gloss value measurement device 100 according to the above first embodiment except that functions of peak calculation section 124 and gloss value calculation section 126 are different. FIG. 6 is a flowchart of a method for measuring a gloss value of a sample with gloss value measurement device 100 according to the second embodiment.

Also in this embodiment, peak calculation section 124 fits the distribution information to a function and calculates the height or area of the peak P and the width of the peak P. At this time, peak calculation section 124 fits the distribution information to one function (e.g., a Lorentz function) and estimates the constants $H$, $x_s$, $W$, and $B$ by the least squares method, the maximum likelihood estimation, or the like so as to decrease the deviation between the actually measured distribution information and the fit function (step S132).

Subsequently, peak calculation section 124 estimates the deviation between the fit function and the distribution information (step S134). As long as the deviation falls within a predetermined tolerance, as in the first embodiment, the process proceeds to calculation of the gloss value by gloss value calculation section 126 by using the estimated values $H$, $W$, and $B$ (step S140). On the other hand, if the deviation falls beyond the tolerance, peak calculation section 124 fits the distribution information to two functions and estimates the constants $H$, $x_s$, $W$, and $B$ in each of the functions by the least squares method, the maximum likelihood estimation, or the like so as to decrease the deviation between a composite value of the two functions and the fit function (step S136). Note that $B$ in each of the functions is adjusted to be the same value. The above tolerance can be set to any range. For example, if a correlation coefficient ($R^2$) of a regression line obtained by the least squares method or the like is less than 0.98 or a p-value obtained by a chi-square test is greater than or equal to a certain value in a graph in which the fit function and the distribution information are plotted, peak calculation section 124 can fit the distribution information to two functions.

Each of the two functions may be any continuous function that is typically used for fitting to the shape of the peak in the spectrum, and may be a function such as a Lorentz function, a Gaussian function, a Voigt function, or a pseudo Voigt function. The two functions may be a combination of different functions, such as a Gaussian function and a Lorentz function, but are preferably a combination including at least a Lorentz function for sufficient fitting to a region of the base $B$ as a result of diffuse reflection light.

By using the estimated values $H$, $W$, and $B$ in the two functions, obtained by fitting to the respective functions, as in the first embodiment, gloss value calculation section 126 calculates gloss values according to the respective functions. Subsequently, gloss value calculation section 126 adds up the gloss values according to the respective the functions and uses the result as a gloss value calculated from the distribution information (step S140a).

Note that in this embodiment, when the gloss value is obtained according to any of Expressions (16) to (22), a may be $(x_0-(W_1+W_2)/4)$, and b may be $(x_0+(W_1+W_2)/4)$ ($W_1$ represents a half width obtained according to a first function, and $W_2$ represents a half width obtained according to a second function). For simple calculation, by using the half width of one of the functions, a may be $(x_0-W_2/2)$, and b may be $(x_0+W_2/2)$. Similarly, although the denominator ($W$) in each of Expressions (16) to (22) may be set to $((W_1+W_2)/2)$, $W_2$ may alternatively by used for simple calculation.

Alternatively, considering the contribution amount of each of the two functions to the appearance of the sample, gloss value calculation section 126 may calculate the gloss value according to the following Expression (23).

[Math. 23]

$$\text{Gloss value} = \log\left(\frac{|H_1 + H_2 - B|}{c_1 W_1 + c_2 W_2}\right)$$

$$\cdots \text{Expression (23)}$$

In Expression (23), $H_1$ and $W_1$ respectively represent the constants $H$ and $W$ estimated from the first function, and $H_2$ and $W_2$ respectively represent the constants $H$ and $W$ estimated from the second function. The constant $c_1$ is the contribution amount of the first function, and the constant $c_2$ is the contribution amount of the second function. For example, $c_1$ and $c_2$ may each be set to 1/2 by assuming that the contribution amounts of the first function and the second function are equal, or may be set as in the following Expressions (24) and (25) by assuming that the height of the peak contributes to the glossiness.
[Math. 24]

$$c_1 = \frac{H_1}{H_1 + H_2 + B} \quad \cdots \text{Expression (24)}$$

[Math. 25]

$$c_2 = \frac{H_2}{H_1 + H_2 + B} \quad \cdots \text{Expression (25)}$$

Note that in Expression (23), as in the first embodiment, as the gloss value, it is possible to set a value obtained by converting at least one element constituting the above ratio into a logarithm, a value obtained by raising at least one element constituting the above ratio, or a value that is not converted into a logarithm or not raised.

By fitting to the two functions in the above manner, the deviation between the value obtained by function fitting and the distribution information can be further reduced, and the content of the distribution information (in particular, the shape of the base from the peak P to the base B) can be accurately reflected in the calculated gloss value.

Accordingly, according to this embodiment, a gloss value having higher correlation with the glossiness visually sensed by humans can be obtained.

[Third Embodiment]

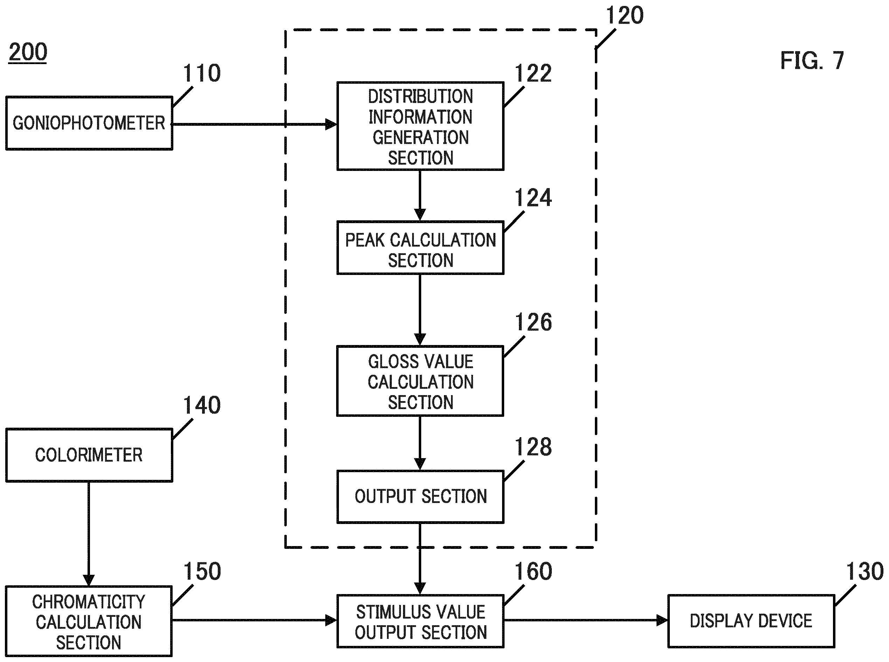

FIG. 7 is a block diagram schematically illustrating tone quantification device 200 according to a third embodiment of the present invention. Tone quantification device 200 includes goniophotometer 110, gloss value calculation device 120, display device 130, colorimeter 140, chromaticity calculation section 150, and stimulus value output section 160. Goniophotometer 110, gloss value calculation device 120, and display device 130 are substantially the same as goniophotometer 110, gloss value calculation device 120, and display device 130 according to the first embodiment or the second embodiment, and thus, description of common sections will be omitted.

When measurement light is incident on the region of the sample having a specific tone, for which goniophotometer 110 measures the radiant intensity of reflected light, colorimeter 140 receives reflected light reflected on the region and measures the intensity of the received reflected light.

The chromaticity obtained by colorimeter 140 is represented as stimulus values indicating components other than the lightness or luminance in a color system and can be represented as chromaticness indices, such as $a^*$ and $b^*$ in the CIE 1976 ($L^*$, $a^*$, $b^*$) color space, $u^*$ and $v^*$ in the in the CIE 1976 ($L^*$, $u^*$, $v^*$) color space, a and b in the Hunter 1948 L, a, b color space, an X-component location and a Z-component value in the CIE 1931 XYZ color space. Among these, in order to increase correlation with the glossiness visually sensed by humans, it is preferable to use values representing the chromaticity based on psychometric quantities that are corrected so as to match human sensing, such as $a^*$ and $b^*$ in the CIE 1976 ($L^*$, $a^*$, $b^*$) color space.

Colorimeter 140 may be a spectrophotometer or a tristimulus colorimeter. In addition, as described above, since specular reflection light (hereinafter also simply referred to as "specular reflection component") of light that is incident on an object largely contributes to sensation of glossy color, colorimeter 140 is preferably a colorimeter that obtains chromaticity measured by a method including the specular reflection component (e.g., specular component included (SCI)). On the other hand, for matte glossy color, for example, diffuse reflection light (hereinafter also simply referred to as "diffuse reflection component") of light that is incident on an object also largely contributes to sensation of glossy color. Thus, also for matte glossy color or the like, in order to increase correlation between the tone of the glossy color visually sensed by humans and a value calculated by quantifying the tone of the gloss value, colorimeter 140 is more preferably a colorimeter that includes an integrating sphere or the like and obtains both chromaticity measured by a method including the specular reflection component and chromaticity measured by a method excluding the specular reflection component (e.g., specular component excluded (SCE)).

In this embodiment, colorimeter 140 is a colorimeter that includes an integrating sphere and obtains both lightness and chromaticity measured by a method including the specular reflection component and lightness and chromaticity measured by a method excluding the specular reflection component, and obtains $L^*$ in the CIE 1976 ($L^*$, $a^*$, $b^*$) color space as the lightness and and $b^*$ as chromaticity. Note that in the following description in this embodiment, the lightness and chromaticity measured by a method including the specular reflection component is denoted as $L^*_I$, $a^*_I$, and $b^*_I$, the lightness and chromaticity measured by a method excluding the specular reflection component is denoted as $L^*_E$, $a^*_E$, and $b^*_E$.

Chromaticity calculation section 150 calculates chromaticity to be used for display on the display device 130 from the chromaticity measured by colorimeter 140. Chromaticity calculation section 150 may quantify the chromaticity measured by colorimeter 140 (chromaticity measured by a method including the specular reflection component or chromaticity measured by a method excluding the specular reflection component) or may correct the chromaticity to highly match human sensation.

In a case where the above correction is to be made, for a low-gloss sample, by correcting chromaticity measured by a method including the specular reflection component so as to be able to take into account the above hue information included in the diffuse reflection component, the tone of the glossy color can be quantified so as to accurately represent both the tone of a high-gloss sample and the tone of the low-gloss sample to be sensed. That is, by weighting chromaticity measured by a method including the specular reflection component by a coefficient that takes into account a spatial distribution of reflected light reflected on the sample, specifically a coefficient calculated so as to decrease the weighting value in accordance with increase of the specular reflection component and increase the weighting value in accordance with decrease of the diffuse reflection component is smaller, effective chromaticity having higher correlation with the tone of the glossy color visually sensed by humans can be calculated.

For example, by using by using the lightness ($L^*_I$) measured by a method including the specular reflection component, the lightness ($L^*_E$) measured by a method excluding the specular reflection component, and an expected maximum of the lightness ($L^*_{max}$), chromaticity calculation section 150 may calculate corrected effective chromaticity $a^*_{eff}$ and $b^*_{eff}$ according to the following Expressions (26) and (27). Note that the value of $L^*_{max}$ may be 100.

[Math. 26]

$$a^*_{eff} = a^*_I \left( 1 + \frac{L^*_I + L^*_E}{2 \times L^*_{MAX}} \right)$$

$$\cdots \text{Expression (26)}$$

[Math. 27]

$$b^*_{eff} = b^*_I \left( 1 + \frac{L^*_I + L^*_E}{2 \times L^*_{MAX}} \right)$$

$$\cdots \text{Expression (27)}$$

Alternatively, by using heights $H_1$ and $H_2$ of the peak relative to the base and the height B of the base (where $H_1$ is H estimated according to a function for which the height H of the peak P becomes the higher, and $H_2$ is H estimated according to a function for which the height H of the peak P becomes the lower), calculated by peak calculation section 124 according to two functions in the second embodiment, chromaticity calculation section 150 may calculate the corrected effective chromaticity $a^*_{eff}$ and $b^*_{eff}$ according to the following Expressions (28) and (29).

[Math. 28]

$$a^*_{eff} = a^*_I \left( 1 + \frac{H_2}{H_1 + H_2 + B} \right)$$

$$\cdots \text{Expression (28)}$$

[Math. 29]

$$b^*_{eff} = b^*_I \left( 1 + \frac{H_2}{H_1 + H_2 + B} \right)$$

$$\cdots \text{Expression (29)}$$

Alternatively, by using the width (W) of the peak calculated by peak calculation section 124 in the second embodiment or the third embodiment, chromaticity calculation section 150 may calculate the corrected effective chromaticity $a^*_{eff}$ and $b^*_{eff}$ according to the following Expressions (30) and (31).
[Math. 30]

$$a^*_{eff} = a^*_I \left( 1 + \frac{W}{90} \right)$$

$$\cdots \text{Expression (30)}$$

[Math. 31]

$$b^*_{eff} = b^*_I \left( 1 + \frac{W}{90} \right)$$

$$\cdots \text{Expression (31)}$$

When peak calculation section 124 calculates widths $W_1$ and $W_2$ of the peak according to two functions as in the second embodiment, by using an average $W_{ave}$ of $W_1$ and $W_2$, $(1 + W_{ave}/90)$ may be used as the coefficient for calculating $a^*_{eff}$ and $b^*_{eff}$.

The effective chromaticity corrected in the above manner reflects influence of the specular reflection component and the diffuse reflection component on chromaticity to be sensed. This further increases correlation with the glossiness visually sensed by humans.

Stimulus value output section 160 combines the effective chromaticity calculated by chromaticity calculation section 150 and the gloss value calculated by gloss value calculation section 126 included in gloss value calculation device 120 and outputs the composite value as a combination of stimulus values representing glossy color of the region in a color space where coordinate axes are chromaticity and glossiness. In addition, stimulus value output section 160 converts the numerical value into a signal that can be transmitted to display device 130.

Specifically, by using the chromaticity and b* or the effective chromaticity $a^*_{eff}$ and $b^*_{eff}$ calculated by chromaticity calculation section 150 as stimulus values representing chromaticity and the gloss value calculated by gloss value calculation section 126 as a stimulus value representing glossiness, stimulus value output section 160 calculates a tristimulus value in the above color space.

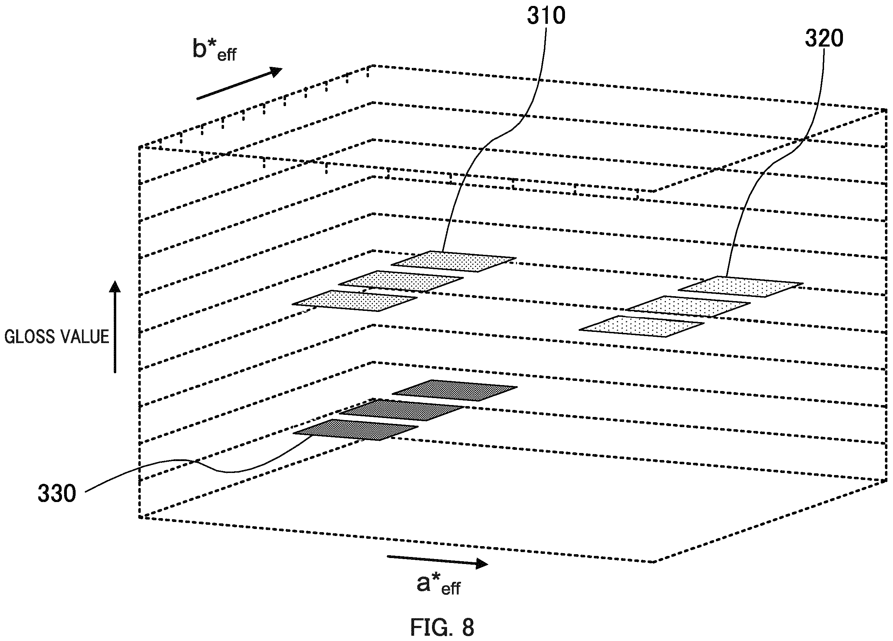

FIG. 8 is a conceptual diagram illustrating a color space where coordinate axes are the above chromaticity and glossiness. In this color space, metallic glosses having different tones (e.g., bluish gold 310, reddish gold 320, and matte gold 330) are represented as tones having different stimulus values.

In addition, stimulus value output section 160 generates a signal including information about glossy color in order to reproduce an image having the above tristimulus value on the display device. The generated signal is transmitted from stimulus value output section 160 to display device 130.

[Other Embodiments]

Note that each of the above embodiments merely illustrates a specific example to embody the present invention, and the technical scope of the present invention should not be limitedly construed by any of these. That is, the present invention can be implemented in various forms without departing from the gist or main features thereof.

For example, although the distribution information is generated by the gloss value calculation device in the above embodiments, the distribution information may also be generated by the goniophotometer, and on the basis of the distribution information generated by the goniophotometer, the gloss value calculation device may calculate the height and width of the peak.

In addition, the calculated gloss value or tristimulus value in the color space may be used as reference information for forming an image having the gloss value or tristimulus value on paper, plastic, metal, glass, textile, or the like.

Examples

Now, specific examples of the present invention will be described along with comparative examples. Note that the present invention is not limited to these.

[Experiment 1]

1. Measurement of Gloss Value

1-1. Test 1

Ten silver images in total with different degrees of glossiness were prepared: two silver low-gloss images; three silver intermediate-gloss images; and five silver high-gloss images.

Each of the images was cut into a size of 15 mm × 50 mm A piece of white sufficiently stiff cardboard was cut into a size of 50 mm × 50 mm and used as a substrate. The above cut images were pasted on this substrate, and ten gloss value measurement method samples were fabricated.

With a goniophotometer (model name: GCMS-4, from MURAKAMI COLOR RESEARCH LABORATORY), while the light receiving angle was being changed, each gloss value measurement method sample was irradiated with incident light at an incident angle of 45°, and reflection intensity at -20° to 80° was measured at intervals of 5° in a range from -20° to 0°, at intervals of 2° in a range from 0° to 30°, at intervals of 1° in a range from 30° to 60°, and at intervals of 2° in a range from 60 to 80°. From the reflection intensity obtained at each light receiving angle, a reflectance was calculated, and a reflection spatial distribution profile indicating a relation between the light receiving angle and the reflectance was obtained.

The shape of the obtained reflection spatial distribution profile was fit to one Lorentz function, and by the least squares method and Solver (registered trademark) of Microsoft Excel (registered trademark), the height (H) of the peak relative to the base B, the half width (W) of the peak, and the height (B) of the base were obtained.

The obtained height (H) of the peak, the half width (W) of the peak, and the height (B) of the base were substituted for Expression (2), and the gloss value of each gloss value measurement method sample was calculated.

[Math. 32]

$$\text{Gloss value} = \frac{|H - B|}{W} \qquad \cdots \text{Expression (2)}$$

1-2. Test 2

In the same manner as that in Test 1 except that the reflection intensity obtained at each light receiving angle was converted into the lightness (L*) in the CIE 1976 (L*, a*, b*) color space and that the value of the lightness (L*) was used instead of the reflectance, the gloss value of each gloss value measurement method sample was calculated.

1-3. Test 3

The shape of the spatial distribution profile was fit to two Lorentz functions, and $H_1$ and $W_1$, which respectively represent the constants H and W estimated from the first function, and $H_2$ and $W_2$, which respectively represent the constants H and W estimated from the second function, were substituted for the following Expression (23), and the gloss value of each gloss value measurement method sample was calculated. Note that $c_1$ and $c_2$ were each 1/2.

[Math. 33]

$$\text{Gloss value} = \log\left(\frac{|H_1 + H_2 - B|}{c_1 W_1 + c_2 W_2}\right) \qquad \cdots \text{Expression (23)}$$

1-4. Test 4

In the same manner as that in Test 3 except that the height (H) of the peak, the half width (W) of the peak, and the height (B) of the base were substituted for Expression (3), the gloss value of each gloss value measurement method sample was calculated.

[Math. 34]

$$\text{Gloss value} = \log \frac{|H - B|}{W} \qquad \cdots \text{Expression (3)}$$

## 1-5. Test 5

The gloss value was calculated by the method described in PTL 3.

Specifically, in the same manner as that in Test 1 except that the shape of the spatial distribution profile was fit to one Gaussian function to obtain a reflection spatial distribution profile and that the value of W/H was calculated from the obtained height (H) and half width W of the peak to be used as the gloss value of each gloss value measurement method sample, the gloss value of each gloss value measurement method sample was calculated.

## 1-6. Test 6

The Hunter's contrast glossiness was obtained.

Specifically, in Test 1, with a goniophotometer (model name: GCMS-4, from MURAKAMI COLOR RESEARCH LABORATORY), while the light receiving angle was being changed, each gloss value measurement method sample was irradiated with incident light at an incident angle of 45°, and reflection intensity at 45° and 0° was measured. The reflection intensity obtained at each light receiving angle was converted into the lightness (L*) in the CIE 1976 (L*, a*, b*) color space.

From the obtained lightness ($L^*_{45}$) at 45° and lightness ($L^*_0$) at 0°, ($L^*_{45}/L^*_0$) was calculated and used as the gloss value of each gloss value measurement method sample.

## 1-7. Test 7

The gloss value was obtained by Flop Index.

Specifically, in Test 1, with a goniophotometer (model name: GCMS-4, from MURAKAMI COLOR RESEARCH LABORATORY), while the light receiving angle was being changed, each gloss value measurement method sample was irradiated with incident light at an incident angle of 45°, and reflection intensity at 30°, 0°, and -65° was measured. The reflection intensity obtained at each light receiving angle was converted into the lightness (L*) in the CIE 1976 (L*, a*, b*) color space.

From the obtained lightness ($L^*_{30}$) at 30°, lightness ($L^*_0$) at 0°, and lightness ($L^*_{-65}$) at -65, the gloss value of each gloss value measurement method sample was calculated according to the following Expression (32).

[Math. 35]

$$\text{Gloss value} = \frac{2.69(L^*_{30} - L^*_{-65})^{1.11}}{L^*_0{}^{0.86}} \qquad \cdots \text{Expression (32)}$$

## 1-8. Test 8

The gloss value was obtained by Flip-Flop.

Specifically, in Test 1, with a goniophotometer (model name: GCMS-4, from MURAKAMI COLOR RESEARCH LABORATORY), while the light receiving angle was being changed, each gloss value measurement method sample was irradiated with incident light at an incident angle of 45°, and reflection intensity at 25° and 75° was measured. The reflection intensity obtained at each light receiving angle was converted into the lightness (L*) in the CIE 1976 (L*, a*, b*) color space.

From the obtained lightness ($L^*_{25}$) at 25° and lightness ($L^*_{75}$) at 75°, ($L^*_{25} - L^*_{75}$) was calculated and used as the gloss value of each gloss value measurement method sample.

## 2. Measurement of Sensation Quantity

Ten silver images with different degrees of glossiness, which are the same images as those used for he measurement of the gloss values, were prepared.

Each of the images was cut into a size of 30 mm × 30 mm A piece of white matte paper was cut into a size of 30 mm × 30 mm and used as a substrate. Each of the above cut images was pasted on this substrate. Furthermore, a piece of matte paper with a size of 30 mm × 30 mm and having a square hole with a size of 15 mm × 15 mm at the center was pasted to cover the substrate, and a sensitivity value measurement method chip was fabricated. This sensitivity value measurement method chip was pasted on a screw tube (No. 7), LABORAN pack from ASONE Corporation, and a sensitivity value measurement method sample was fabricated.

Sensitivity testing was performed by twelve persons in total: two men and two women in their twenties, two men and two women in their thirties, and two men and two women in their forties.

Magnitude estimation was used to convert the sensation quantity into a numerical value. Specifically, each subject was shown the sensitivity test sample under the D50 light source in a standard light source device (Judge II) installed in a room without lighting and shielded from the sun, and scored 0 to 10 for a metallic texture of each of the ten samples. The obtained values were used as sensed gloss values.

3. Evaluation

A graph was generated by plotting the sensed gloss values on the horizontal axis and the gloss value obtained by any of Tests 1 to 8 on the vertical axis, and correlation coefficients ($R^2$) of regression lines were obtained. The results are illustrated in Table 1.

[Table 1]

| Vertical Axis | Correlation Coefficient ($R^2$) | Note |
|---|---|---|
| Test 1 | 0.75 | First Embodiment (Reflectance) |
| Test 2 | 0.85 | First Embodiment (Lightness L*) |
| Test 3 | 0.87 | Second Embodiment (Lightness L*) |
| Test 4 | 0.95 | Second Embodiment (Logarithm) |
| Test 5 | 0.65 | PTL 3 |
| Test 6 | 0.15 | Hunter's Contrast Glossiness |
| Test 7 | 0.16 | Flop Index |
| Test 8 | 0.17 | Flip-Flop |

Table 1 shows that the gloss value according to each embodiment of the present invention has higher correlation with the glossiness visually sensed by humans.

[Experiment 2]

To verify the correlation of the gloss value in a low-gloss region, substantially the same test as Experiment 1 was performed by using six samples: five samples for which the sensed gloss value is less than or equal to 7 in Test 1 and an additional low-gloss sample.

As the gloss value, a gloss value calculated according to Expression (3) as in Test 4 and a gloss value calculated according to the following Expression (16) were used, a graph was generated by plotting the sensed gloss values on the horizontal axis and the gloss value obtained according to Expression (3) or (16) on the vertical axis, and correlation coefficients ($R^2$) of regression lines were obtained. The results are illustrated in Table 2.

[Math. 36]

$$\text{Gloss value} = \frac{\int_a^b f(x)\,dx}{W_e} \qquad \cdots \text{Expression (16)}$$

EP 3 789 756 A1

[Table 2]

| Vertical Axis | Correlation Coefficient ($R^2$) | Note |
|---|---|---|
| Expression (3) | 0.78 | Gloss value was calculated based on height of peak |
| Expression (16) | 0.94 | Gloss value was calculated based on area of peak |

Table 2 shows that the gloss value represented by the ratio of the area of the peak to the width of the peak has higher correlation with the glossiness visually sensed by humans particularly for a low-gloss sample.

This application claims priority from Japanese Patent Application No. 2018-049575, filed on March 16, 2018, the contents of which are incorporated herein in its entirety.

Industrial Applicability

According to the present invention, a method for quantifying glossiness with higher correlation with the glossiness visually sensed by humans is provided. Thus, the present invention is expected to make it easy to transfer and share information about glossy color in the printing industry, the advertising industry, and the like.

Reference Signs List

100 Gloss value measurement device
110 Goniophotometer
120 Gloss value calculation device
122 Distribution information generation section
124 Peak calculation section
126 Gloss value calculation section
128 Output section
130 Display device
140 Colorimeter
150 Chromaticity calculation section
160 Stimulus value output section
200 Tone quantification device
310 Bluish gold
320 Reddish gold
330 Matte gold

Claims

1. A gloss value calculation device, comprising:

a peak calculation section that obtains, in distribution information of lightness or reflection intensity, a height or an area of a peak of the lightness or reflection intensity and a width of the peak of the lightness or reflection intensity, the lightness or reflection intensity being relative to a light receiving angle and being obtained by measuring reflected light resulting from reflection of measurement light used for irradiation of an object; and
a gloss value calculation section that calculates a gloss value represented by a ratio of the height or area of the peak to the width of the peak.

2. The gloss value calculation device according to claim 1,
wherein the peak calculation section sets a half width (W) of the peak in the distribution information as the width of the peak of the lightness or reflection intensity.

3. The gloss value calculation device according to claim 1 or 2,
wherein the peak calculation section sets, as the height of the peak of the lightness or reflection intensity, the height (H) of the peak in the distribution information or a difference between the height (H) of the peak and a height (B) of a base.

17

**4.** The gloss value calculation device according to any one of claims 1 to 3,
wherein the peak calculation section fits the distribution information to a function to obtain the height or area of the peak of the lightness or reflection intensity and the width of the peak of the lightness or reflection intensity.

**5.** The gloss value calculation device according to claim 4,
wherein the peak calculation section fits the distribution information to a plurality of functions to obtain the height or area of the peak of the lightness or reflection intensity and the width of the peak of the lightness or reflection intensity.

**6.** The gloss value calculation device according to claim 4 or 5,
wherein the function is one selected from the group consisting of a Lorentz function, a Gaussian function, a Voigt function, and a pseudo Voigt function.

**7.** The gloss value calculation device according to any one of claims 1 to 6,
wherein the distribution information indicates a distribution of lightness represented by using a psychometric quantity based on the light receiving angle.

**8.** The gloss value calculation device according to any one of claims 1 to 7,
wherein the gloss value calculation section calculates a gloss value represented by a ratio of the area of the peak to the width of the peak.

**9.** The gloss value calculation device according to any one of claims 1 to 8,
wherein the gloss value calculation section uses, as the gloss value, a ratio that is the ratio of the height or area of the peak to the width of the peak and is obtained by converting at least one element constituting the ratio into a logarithm or by raising at least one element constituting the ratio.

**10.** The gloss value calculation device according to any one of claims 1 to 9, comprising:
an output section that generates a signal for reproducing an image having the calculated gloss value on a display device.

**11.** A gloss value measurement device, comprising:

a goniophotometer that measures, at a plurality of different light receiving angles, a radiant intensity of reflected light resulting from light used for irradiation of and reflected on an object; and
the gloss value calculation device according to any one of claims 1 to 10.

**12.** A glossy color tone quantification device, comprising:

the gloss value calculation device according to any one of claims 1 to 10; and
a stimulus value output section that combines a gloss value measured by the gloss value measurement device and chromaticity of the object and outputs a composite value as a stimulus value representing glossy color of the object in a color space.

**13.** A gloss value calculation method, comprising:

obtaining, in distribution information of lightness or reflection intensity, a height or an area of a peak of the lightness or reflection intensity and a width of the peak of the lightness or reflection intensity, the lightness or reflection intensity being relative to a light receiving angle and being obtained by measuring reflected light resulting from reflection of measurement light used for irradiation of an object; and
calculating a gloss value represented by a ratio of the height or area of the peak to the width of the peak.

100

FIG. 1

START

↓

MEASURE REFLECTION INTENSITY S110

↓

GENERATE DISTRIBUTION INFORMATION S120

↓

CALCULATE HEIGHT OR AREA OF
PEAK AND WIDTH OF PEAK S130

↓

CALCULATE GLOSS VALUE S140

↓

OUTPUT GLOSS VALUE S150

↓

DISPLAY IMAGE S160

↓

END

FIG. 2

FIG. 3

FIG. 4

FIG. 5B

FIG. 5A

START

MEASURE REFLECTION
INTENSITY
S110

GENERATE DISTRIBUTION
INFORMATION
S120

FITTING TO
ONE FUNCTION
S132

DOES DEVIATION
FROM DISTRIBUTION INFORMATION
FALL WITHIN
TOLERANCE?
S134

NO

FITTING TO
TWO FUNCTIONS
S136

YES

CALCULATE GLOSS VALUE
S140

CALCULATE GLOSS VALUE
S140a

OUTPUT GLOSS VALUE
S150

DISPLAY IMAGE
S160

END

FIG. 6

EP 3 789 756 A1

**FIG. 7**

FIG. 8

## INTERNATIONAL SEARCH REPORT

| International application No. |
|---|
| PCT/JP2019/010814 |

### A. CLASSIFICATION OF SUBJECT MATTER
Int.Cl. G01N21/57(2006.01)i, G01J3/51(2006.01)i

According to International Patent Classification (IPC) or to both national classification and IPC

### B. FIELDS SEARCHED

Minimum documentation searched (classification system followed by classification symbols)
Int.Cl. G01N21/00-21/01, G01N21/17-21/61, G01J3/46-3/51

Documentation searched other than minimum documentation to the extent that such documents are included in the fields searched
| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 11-142331 A (PEARL SCIENCE LABORATORY) 28 May 1999, paragraphs [0019]-[0037], fig. 1-7 (Family: none) | 1-3, 13<br>1-13 |
| Y | JP 2006-266763 A (CANON INC.) 05 October 2006, paragraphs [0027]-[0093], fig. 1-9 & US 2007/0201029 A1, paragraphs [0069]-[0134], fig. 1-9 | 1-13 |

☒ Further documents are listed in the continuation of Box C.     ☐ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 15 May 2019 (15.05.2019) | 04 June 2019 (04.06.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

## INTERNATIONAL SEARCH REPORT

International application No.

PCT/JP2019/010814

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2014-232098 A (NSK LTD.) 11 December 2014, paragraph [0079], fig. 24 & US 2016/0069798 A1, paragraph [0160], fig. 25 | 5-12 |
| Y | JP 2015-68813 A (CANON INC.) 13 April 2015, paragraph [0026] (Family: none) | 7-12 |
| Y | JP 2010-243353 A (RICOH CO., LTD.) 28 October 2010, paragraph [0013] (Family: none) | 12 |
| A | JP 2006-261820 A (FUJI XEROX CO., LTD.) 28 September 2006 & US 2006/0210295 A1 | 1-13 |
| A | JP 3-170810 A (YOKOGAWA ELECTRIC CORP.) 24 July 1991 (Family: none) | 1-13 |
| A | JP 2015-49691 A (HONDA MOTOR CO., LTD.) 16 March 2015 & US 2016/0371880 A1 | 1-13 |
| A | GB 2277148 A (FEATHER, James William) 19 October 1994 (Family: none) | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005075961 A
- JP 2016197035 A
- JP 2011162886 A
- JP 2018049575 A